# EUROPEAN PATENT SPECIFICATION

(11) **EP 3 481 227 B1**
(45) Date of publication and mention of the grant of the patent: **19.05.2021**
(21) Application number: 17739582.9
(22) Date of filing: 14.07.2017
(51) Int. Cl.: A23L 7/104, A23L 11/00, A23L 19/10, A23L 19/12, A23L 29/30, C08B 30/12, A23L 19/15, A23L 7/10, A23L 7/143, A23L 11/50

(54) **PROCESS FOR PREPARATION OF FOOD PRODUCT COMPRISING HYDROLYZED STARCH**
VERFAHREN ZUR HERSTELLUNG EINES NAHRUNGSMITTELPRODUKTS MIT HYDROLYSIERTER STÄRKE
PROCÉDÉ DE PRÉPARATION DE PRODUIT ALIMENTAIRE CONTENANT DE L'AMIDON HYDROLYSÉ

(30) Priority: 15.07.2016 EP 16179668; 16.12.2016 EP 16204620
(43) Date of publication of application: 15.05.2019
(73) Proprietor: Société des Produits Nestlé S.A., 1800 Vevey (CH)
(72) Inventor: MATEUS, Maria-Luiza, 1052 Le Mont-sur-Lausanne Vaud (CH); SIEVERT, Dietmar, 1025 St. Sulpice (CH); DO, Tram Anh Line, 25370 Les Hôpitaux-Neufs (FR); CHANVRIER, Hélène Michèle Jeanne, 1350 Orbe Vaud (CH)
(74) Representative: Rupp, Christian
(86) International application number: PCT/EP2017/067855
(87) International publication number: WO 2018/011400

(56) References cited:
- EP-A1- 0 453 390
- EP-A1- 0 619 083
- EP-A1- 2 110 025
- WO-A1-03/024242
- US-A- 3 950 543
- US-A1- 2009 005 553
- US-A1- 2009 047 385
- US-A1- 2014 314 907
- US-A1- 2016 081 375

## Description

### Technical field of the invention

The present invention relates to a method of preparing a food product comprising hydrolysed starch. In particular, the present invention relates to a method of preparing a food product comprising hydrolysed starch and showing certain texture attributes, in particular a semolina texture.

### Background of the invention

Cereal products manufactured using common roller drying technologies are typically characterized by having smooth texture after reconstitution in liquids. Although such smooth texture is generally well perceived by consumers, in some geographies a more granular mouthfeel (semolina texture) is considered as a benefit. US2014314907 A1 discloses a method for preparing dry instant porridge containing hydrolyzed starch for human consumption comprising feeding an extruder with a milled carbohydrate-rich food blend, amylase, and an aqueous solution, and adjusting residence time in the extruder. US3950543 A discloses a process for making foods and animal feeds from starchy raw materials, such as flour, meal and grits of cereals, pulses, starch roots, tubers, oil seeds, cakes of oil seeds, milk products, or mixtures of these materials, which includes the steps of: mixing water and at least one high-temperature resistant enzyme with the raw materials to form an extrudable paste; effecting partial gelatinization and initiating fermentation by extruding the paste while heating the paste to a temperature of from 65 DEG C (149 DEG F) to 115 DEG C (239 DEG F); converting the starch into dextrins and sugars by treating the extruded product in a fermentation apparatus for 40 to 90 minutes at a temperature of 55 DEG C (131 DEG F) to 90 DEG C (194 DEG F) in a high humidity atmosphere, as near as possible to saturation; and drying the product after fermentation.

Cereal products having semolina texture exist, but their manufacturing process present some technical challenges. For example, an ingredient providing coarse particles/pieces should be added (for example, durum wheat semolina) and such approach may limit the possibility to use cereals flours already existing in the manufacturing site. Additionally, the incorporation of the coarse particle ingredient in the required amount may often cause problems during processing (sedimentation and/or separation) that require strict process and recipe adaptations to be overcome.

Semolina texture can also be obtained by using agglomeration processes. Anyway, also this approach is not ideal due to microbiological issues which can develop in the final product.

Hence, a new process for hydrolysis of starch and preparation of cereal products having semolina texture would be advantageous. In particular, there would be a need for a process providing cereal products based on hydrolized starch and having such semolina texture, which process wouldn't require the addition of coarse particle ingredients and/or which would not request a strict adaptation of recipes and process manufacturing conditions.

### Summary of the invention

Thus, an object of the present invention relates to providing a method for producing a food product comprising hydrolysed starch and having semolina texture.

In particular, it is an object of the present invention to provide a method that solves the above mentioned problems of the prior art concerned with semolina texture in foods comprising hydrolysed starch. More in particular, it is an object of the present invention to provide a method that provides food product comprising hydrolysed starch and having semolina texture.

Thus, one aspect of the invention relates to a method according to claim 1 for producing a food product comprising hydrolysed starch, said method comprising the steps of:
a) Providing a starting material which comprises starch,
b) Providing as ingredients: water, fat, at least one amylolytic enzyme and optionally one or more other ingredients, wherein fat is added in an amount comprised between 1 and 40% w/w, for example between 2 and 25% w/w, for example between 5 and 20% w/w, for example between 5 and 18% w/w of the solids composition,
c) Mixing the starting material of step a) and the ingredients of step b)
d) adjusting the temperature of the mixture of step c) to a temperature which leads to gelatinization of the starch in said mixture, and
e) simultaneously to step d) subjecting said mixture of step c) to high shear mixing, wherein said high shear mixing is achieved by use of a Ring Layer Mixer,
f) Incubating the mixture of step e) such that the desired degree of hydrolysis is achieved,
g) Optionally heat-treating the mixture obtained by high shear mixing according to steps a) to f);
h) Optionally cooling the mixture obtained by previous steps;
j) drying the mixture which was obtained by high shear mixing according to steps a) to f);
thereby obtaining a food product comprising hydrolysed starch.

A further aspect of the invention relates to a food product obtainable or obtained by the methods of the invention. The food product is characterized by having a semolina texture, wherein semolina texture is a sensory attribute once reconstituted, which is defined by quantity, size and/or hardness of round particles perceived in mouth and wherein the semolina attribute is equal or higher than 1.

### Brief description of the figures

Figure 1 shows the conventional set up for in line hydrolysis (see Example 1)
Figure 2 shows set up for in-line hydrolysis using high shear mixer (Ring Layer Mixer, see Example 2).
Figure 3 shows the results from sensory panel testing comparison of finished product obtained by conventional and invented process (see Example 3).
*Fig. 4* reports relative ranking of eight products which were assessed after reconstitution as above described for their semolina sensory attribute by an internal panel.

The present invention will now be described in more detail in the following.

### Detailed description of the invention

### Definitions

Prior to discussing the present invention in further details, the following terms and conventions will first be defined:
The term 'degrees C' refers to degrees Celsius.
The term "starch" as used herein refers to the polysaccharide macromolecules used for energy storage by most plants. It consists of a large number of glucose units joined by glycosidic bonds. The two high-molecular weight components of starch are amylose and amylopectin. Starch is found for example in cereals, tubers and legumes. Examples of tubers include potatoes, sweet potatoes, cassava, yams etc. Examples of legumes include beans (such as pinto, red, navy), peas, lentils, chickpeas, peanuts etc. When the term "starch" is used in the context of the present invention, it may indicate starch from one plant origin or a mixture of starches from different plant origins.
The term "cereal" as used herein refers to any grass cultivated for the edible components of its grain. Examples of cereal are wheat, rice, maize, barley, rye, oats, buckwheat, millet, quinoa, sorghum et cetera.
The term "food product" as used herein refers to a finished product suitable for human consumption and/or to a intermediate preparation which is meant to deliver a finished product after being subject to additional processing step(s), comprising a heat treatment. Specific non-limiting examples of finished food products are biscuits, wafers, cereals (breakfast and infant), especially cereals for porridge, bread, bakery products, pizza, cereal milk drink, baby food and the like. In particular, finished food products may be cereal (like Infant or all family Cereals) for porridge or cereals for Cereal Milk Drink. Specific non-limiting examples of preparation which are meant to deliver a finished product after being subject to additional processing steps are batters, doughs, slurries and the like.
Within the context of the present invention, "Infant cereal" products identifies compositions containing cereals to be administered to infants and identifies two main categories: complete cereal product which need to be reconstituted in water as they already contain all the necessary nutrients to be delivered with the meal; and standard cereal product which are meant to be reconstituted with milk (Whole or skimmed), infant formula, follow-on formula and/or GUMs .
Within the context of the present invention, the term "all family cereals" identifies compositions containing cereals to be consumed by children and adults. For example, all family cereals are reconstituted in milk (whole or skimmed) and consumed in the format of a porridge.
The term "gelatinization" as used herein refers to the process of swelling and opening of starch granules which are semi-crystalline in the native state, where the intermolecular bonds of starch molecules in a starch granule are broken, thus making the crystallinity disappear and leading to the binding of water and the irreversible dissolving of the starch granule macromolecules, i.e amylose and amylopectin, in water. The determination of the gelatinization temperature is well known to the skilled person, and may be performed by e.g. the Kofler hot stage microscopy (see further Table 1 and notes), or for example by Differential Scanning Calorimetry (DSC).
The term "amylolytic enzymes" as used herein refers to any enzyme capable of converting starch into dextrins and sugar (mono- or disaccharides). Examples of amylolytic enzymes include amylases and pullulanase. Examples of amylases include alpha-amylases, beta-amylases, gamma-amylases.
The expression "fat" or "fats" or "fat source" or "lipid" or "lipid source" or "oil" or "oils" in the context of the present invention indicates an edible solid or liquid fat or mixtures thereof. Not limiting categories of fats are those from animal, microbial, algal or vegetable origins. Non limiting examples of fats which could be used according to the present invention are: fish oil, cocoa butter, cocoa butter equivalents (CBE), cocoa butter substitutes (CBS), vegetable oils (for example rapeseed oil, palm oil, corn oil, soy oil, coconut oil and/or sunflower oil) and butter oils amongst others.
The term "semolina texture" as used herein indicates a sensory attribute of the product obtained according to the present invention once such product is reconstituted (in water, milk or as above defined). The "semolina" attribute is defined as the "quantity, size and/or hardness of round particle perceived in mouth" and may be rated by a trained sensory panel on a scale between 0 and 10.

In the context of the present invention, one reference product having semolina texture has been used to train the panel for assessing this attribute; the product may prepared as follows:
- mix 30 g of a semolina product **[Semoule de blé dur (M classic, Migros, CH)],** 150g of milk (1.5% fat material) and 150 g of cold water in a pan with a whisk;
- add 10 g of sugar to get closer to the product universe (optional step);
- put of an heating plaque at maximum power;
- when boiling starts, decrease the power of the heating plaque of 50% and leave to cook for 4 minutes without stopping the stirring ;
- it is necessary to obtain a texture bound and thickened, leave one more minute if necessary .

This reference is at 8.5 of intensity for the semolina sensory attribute of quantity of round particles on 10 scale points,
This reference is at 2.5 of intensity for the semolina attribute of size of round particles on 10 scale points.
This reference is at 5 of intensity for the semolina attribute of hardness of round particles on 10 scale points.

### Method of the invention

The present invention is based on the surprising finding that implementation of the method of the invention yields a food product comprising hydrolysed starch and having a semolina texture as compared to a smooth mouthfeel provided by the product obtained via the conventional process.

It is believed that by the method of the invention semolina texture is delivered in the food product comprising hydrolysed starch thanks to the particular set up in terms of ingredients which are present in the mixture and the operating conditions employed.

It was in fact observed that the presence of fats is necessary to ensure that semolina texture is obtained in the food product. As demonstrated in Example 3 and 4, in the absence of fats the semolina texture attribute is not obtained in the product. Similarly, it was concluded that the high shear mixing conditions are necessary to ensure that semolina texture is obtained in the food product. As demonstrated in Example 3, in the absence of an equipment which can deliver high shear mixing during performance of step e), the semolina texture attribute is not obtained in the food product.

Without wishing to be bound by theory, is it thus believed that during the gelatinization process of starch, the high shear mixing conditions allow some specific arrangements of starch and lipids or interaction between the starch molecules and the lipids present in the mixture. This would induce the formation of the coarse particles during rehydration, which imparts a semolina texture to the finished food product.

It is in fact believed that high shear increases fat dispersion on the cereal/starch matrix and the higher the fat droplet dispersion, the smaller the fat droplets and the larger will be the contact surface of oil with the liquid during reconstitution. Accordingly, during reconstitution the imbibition of liquid in the cereals/starch is be slowed down and slow water penetration(or imbibition) may enhance semolina texture.

Thus, one aspect of the invention relates to a method for producing a food product comprising hydrolysed starch, said method comprising the steps of:
a) Providing a starting material which comprises starch,
b) Providing as ingredients: water, fat, at least one amylolytic enzyme and optionally one or more other ingredients,
c) Mixing the starting material of step a) and the ingredients of step b)
d) adjusting the temperature of the mixture of step c) to a temperature which leads to gelatinization of the starch in said mixture, and
e) simultaneously to step d) subjecting said mixture of step c) to high shear mixing,
f) Incubating the mixture of step e) such that the desired degree of hydrolysis is achieved,
g) Optionally heat-treating the mixture obtained by high shear mixing according to steps a) to f);
h) Optionally cooling the mixture obtained by previous steps;
j) drying the mixture which was obtained by high shear mixing according to steps a) to f);
   thereby obtaining a food product comprising hydrolysed starch.

In one embodiment of the present invention, a method for producing a food product comprising hydrolysed starch is provided which, in addition to being endowed with semolina texture, is also characterised by comprising lower amounts of maltose, as compared to the product obtained via conventional hydrolysis process.

In such embodiment, the invention relates to a method for producing a food product comprising hydrolysed starch, said method comprising the steps of:
a) Providing a starting material which comprises both starch and at least one amylolytic enzyme,
b) Providing as ingredients: water, fat, at least one further amylolytic enzyme and optionally one or more other ingredients, wherein fat is added in an amount comprised between 1 and 40% w/w, for example between 2 and 25% w/w, for example between 5 and 20% w/w, for example between 5 and 18% w/w of the solids composition,
c) Mixing the starting material of step a) and the ingredients of step b)
d) adjusting the temperature of the mixture of step c) to a temperature which leads to gelatinization of the starch in said mixture and inactivation of the at least one amylolytic enzyme which was provided with the starting material in a), and
e) simultaneously to step d) subjecting said mixture of step c) to high shear mixing, wherein said high shear mixing is achieved by use of a Ring Layer Mixer,
f) Incubating the mixture of step e) such that the desired degree of hydrolysis is achieved,
g) Optionally heat-treating the mixture obtained by high shear mixing according to steps a) to f);
h) Optionally cooling the mixture obtained by previous steps;
j) drying the mixture which was obtained by high shear mixing according to steps a) to f);
   thereby obtaining a food product comprising hydrolysed starch.

### Starting material

The method of the invention involves providing a starting material which comprises starch.

In one emdodiment, the starting material comprises both starch and at least one amylolytic enzyme.

Some embodiments relate to methods according to the invention wherein the starting material is a plant preparation, such as a preparation of that part of the plant which contains the majority of the plant's starch storage granules. In some embodiments such preparations may also include other parts of the plant, such as stems, leaves etc. In some embodiment, such plant preparations also comprise at least one amylolytic enzyme.

In particular embodiments, the starting material is a dry plant preparation, such as a flour. Thus, the starting material may be selected from a flour of one or more grains, such as a flour selected from wheat flour, rice flour, maize flour, barley flour, rye flour, oat flour, buckwheat flour, millet flour, quinoa flour, sorghum flour; a flour made from one or more tubers, such as potato, cassava; a flour made from legumes such as pea flour; or combinations thereof.

The term dry as used herein means comprising water in the range from 0.01 to 20 % w/w such as from 0.01 to 16% w/w, 0.01 to 15% w/w, 0.01 to 12% w/w, 0.01 to 8% w/w, 0.01 to 5% w/w, 0.01 to 3% w/w, w/w such as 0.01 to 0.5 % w/w%, or for example being essentially free from water. For example, wheat flour may contain up to 15% moisture (w/w), such as from 12 to 15% w/w, 12 to 14% w/w or 12 to 13% w/w, and is considered a dry plant preparation.

The term flour as used herein refers to the product of milling. The particle size or particle size distribution of the flour is not considered to be critical for the method. Plant preparations in the form of flours which are suitable as starting material for production of hydrolysed starch are known in the art, and selection of such is also within the skill of the person skilled in the art.

### Endogenous amylolytic enzymes

In one embodiment of the present invention, the starting material for the method of the invention comprises both starch and at least one amylolytic enzymes. In this embodiment, the at least one amylolytic enzymes present in the starting material may be endogenous amylolytic enzymes. In other words, the starting material may comprise amylolytic enzymes which have not been added by human intervention, but rather have been co-extracted together with the starch (granules) from the plant material, i.e. endogenous amylolytic enzymes. Examples of endogenous amylolytic enzymes include alpha-amylases, and beta-amylases and gamma amylases.

For example, in the specific case of wheat, endogenous amylolytic enzymes, in particular endogenous amylases, are typically inactivated above 60-70 degrees C. Inactivation temperature of endogenous enzymes in other cereals could be determined according to procedure well known to the skilled person, for example by using commercial kits to determine enzyme activity under different conditions.

Examples of commercially available kits which may be used are Betamyl method (K-beta3 10/10) available from Megazyme ™ (beta amylase activity), and Phadebas® (alpha amylase activity).

The invention in one embodiment relates to a method according to the invention wherein in step d) is the temperature of the mixture of step c) is adjusted to a temperature which leads to gelatinization of the starch and inactivation of endogenous amylolytic enzymes in said mixture. Such temperature adjustement is simultaneous to subjecting the mixture of step c) to high shear mixing as described in step e).

### Providing water

The method of the invention comprises providing water and mixing with the starting material. Enzymatic hydrolysis of starch requires the presence of water. If the starting material is provided in dry form, such as for example a dry plant preparation, such as for example a plant flour, water may be provided by one or more of steam injection, addition of water, the provision of an aqueous further ingredient, provision of an aqueous solution of at least one (further) amylolytic enzyme or combinations thereof.

If the starting material is not in dry form, but comprises more than 20% water w/w, or for example more than 15% water w/w, the water may be considered to be at least partially provided by the starting material. In some embodiments, further water may also be provided, for example by one or more of steam injection, addition of water, the provision of an aqueous further ingredient, provision of an aqueous solution of at least one (further) amylolytic enzyme or combinations thereof.

In particular embodiments, the provision of water comprises providing water in the form of steam. In particular embodiments, water in the form of steam is provided by way of steam injection, such as direct steam injection. In other embodiments, water in the form of steam is provided by way of steam infusion (where ingredients are sprayed in a steam atmosphere). Direct steam injection has the advantage of rapidly heating the mixture of starting material, the optionally water provided from above-mentioned other sources, the at least one (further) amylolytic enzyme, the fat and any optional further ingredients, at the same time as water is added.

Direct steam injection may be achieved by any suitable means, and the selection of such a means is within the skill of a person of ordinary skill in the art.

In one embodiment, when the provision of water is at least partially in the form of steam, such steam provision may occurr simultaneaously to steps d) and e).

Some embodiments relate to the method according to invention, wherein said mixture (step c) has a total solids content in the range of 20 to 70 % w/w, such as 30 to 70 % w/w, such as 35 to 70% w/w, such as such as 40 to 70% w/w, such as 45 to 70%, such as 50 to 70% w/w, such as 55 to 70%, such as 40 to 65% w/w.

Some embodiments relate to the method according to invention, wherein said mixture (step c) has a total solids content in the range of 20 to 60 % w/w, such as 30 to 60 % w/w, such as 35 to 60% w/w, such as such as 40 to 60% w/w, such as 45 to 60%, such as 50 to 60% w/w, such as 55 to 60%; or for example from 20 to 55% w/w, 20 to 50% w/w, 20 to 40% w/w; or for example 30 to 50% w/w, or 30 to 40% w/w.

### Amylolytic enzymes addition in step b)

The method of the invention comprises a step wherein at least one amylolytic enzyme is added to the starting material and mixed together with the starting material and fats. Thus, in step b) an amylolytic enzyme is provided and all ingredients mixed in step c)..

The at least one amylolytic enzyme provided in step b) may be any suitable amylolytic enzyme, for example an amylase (such as alpha-amylase and/or beta-amylase) and/or pullalanase. In particular embodiments, the at least one further amylolytic enzyme is one or more of an alpha amylase and a beta amylase. The invention in some embodiments relates to a method according to the invention wherein said at least one amylolytic enzyme provided in step b) comprises or consists of amylase not endogenous to the provided starting material.

The selection of the at least one amylolytic enzyme provided in step b) may depend on the gelatinization temperature of the starch present in the starting material. Thus, in particular embodiments, this at least one amylolytic enzyme which is provided in step b) is active at or above the temperature to which the mixture is adjusted in step d) (see further below gelatinization temperature).

In yet further particular embodiments, the at least one amylolytic enzyme provided in step b) has a temperature optimum at or above the temperature to which the temperature is adjusted in step d). The temperature optimum of an enzyme is a certain temperature or range of temperatures where an enzyme's catalytic activity is at its greatest.

As mentioned above, the at least one amylolytic enzyme provided in step b) may be provided as an aqueous solution.

Selecting an at least one amylolytic enzyme provided in step b) which is active, or for example has a temperature optimum, at a temperature in or above the gelatinization temperature range of the starch present in the mixture, ensures that hydrolysis of the starch will take place and will be due to the selected enzymes.

Amylolytic enzymes are commercially available from several distributors, for example from DuPont, Novozymes, DSM, BioCatalysts.

In one embodiment, in step b) an amylolytic enzyme is provided, which is in addition to the amylolytic provided in step a), and all ingredients mixed in step c). In some embodiments, the at least one further amylolytic enzyme is provided in addition to an endogenous amylolytic enzyme provided in step a).

### Fats

According to the present invention, fats are provided in step b).

The fat provided in step b) is added in an amount comprised between 1 and 40%, for example between 1 and 30%, for example between 2 and 25%, for example between 7 and 20% w/w, for example between 7 and 18% w/w, for example between 7 and 15% w/w of the solid composition.

In another embodiment, fat provided in step b) is added in an amount comprised between 1 and 30%, for example between 2 and 25%, for example between 5 and 20% w/w, for example between 5 and 18% w/w, for example between 5 and 15% w/w of the solid composition.

In one embodiment, fat is an edible solid or liquid fat or mixtures thereof.

In one embodiment, fat is selected in the group consisting of: vegetable oils (for example rapeseed oil, palm oil, corn oil, soy oil, coconut oil and/or sunflower oil), butter and butter oils or mixtures thereof.

In one embodiment, fats such as oils are provided in step b). In a further embodiment, fats such as oils are provided in step b) in an amount comprised between 2 and 25%, for example between 7 and 20% w/w of the solid composition.

As above mentioned, it is believed that the presence of fats at the time of starch gelatinization under high shear mixing is key for obtaining the semolina texture which characterizes the food product according to the method of the invention.

### Further ingredients

In some embodiments of the invention, one or more other ingredients are included. The one or more further ingredients may be any ingredient suitable for a food. In particular embodiments, the one or more other ingredients added in step b) are not negatively affected by the temperature and high shear mixing of step d) and e). Examples of one or more other ingredients may be protein or amino acid sources, carbohydrate sources such as sugars and/or pre-biotics, fibers , dietary fibers, minerals, vitamins and the like.

In some embodiments of the method, the food product obtained by a method of the invention is itself a finished food product. In such embodiments, at least one other ingredient is provided in step b), such as one or more ingredients such as for example protein or amino acid sources, carbohydrate sources such as sugars and/or pre-biotics, fibers, dietary fibers, minerals, vegetable ingredients, fruit ingredients, milk based ingredients and vitamins.

### Mixing and Premixing

The method of the invention comprises a step of mixing the starting material of step a) and the ingredients of step b).

It is not believed that this mixing is critical, and thus may be done in any suitable manner. The selection of a method of mixing is within the skill of a person skilled in the art.

In some embodiments of the method according to the invention, the step c) of mixing the starting material of step a) and the ingredients of step b), is performed prior to the step d). This means that the starting material and ingredients are mixed prior to the adjustment of temperature which takes place in step d). This is referred to as "pre-mixing". In case ingredients are pre-mixed as above described, it is also not believed that the mixing order prior to the performance of step d) is critical.

In one embodiment, mixing of the starting material of step a) and the remaining ingredients of step b) (fat and other optional ingredients) is performed prior to the provision of the amylolytic enzyme of step b), so that mixing of all the ingredients of step a) and b) provided for in step c) doesn't not occur at the same time.

In another embodiment, mixing of the starting material of step a) and of the ingredients of step b) is performed simultaneosuly, so that mixing of all the ingredients of step a) and b) provided for in step c) occurs at the same time. However, premixing of ingredients is not necessary: dry ingredients and water can be directly fed inside the high shear mixer, which is a Ring Layer Mixer.

In other, particular embodiments, the step c) of mixing takes place simultaneously with step d). For example, the starting material of step a) and the ingredients of step b) may be fed to a container, in which heating is erformed and in which, at the same time, mixing takes place.

In one embodiment, steps c), d) and e) are performed in a ring layer mixer, simultaneously.

### Adjusting temperature to gelatinization temperature

The method of the invention comprises a step d) where the temperature of the mixture obtained in step c) is adjusted to a temperature which leads to the gelatinization of the starch in said mixture. The temperature is adjusted simultaneously with the high shear mixing of the mixture.

The gelatinizing temperature refers to the temperature (or temperature range) at which a starch gelatinizes in excess water (for example total solid not higher than 20%). Different species of plants yield starches which may have different gelatinization temperatures, and these are well-known in the art. Gelatinization temperature ranges for some starches, are given below in Table 1 by way of example.

**Table 1: Typical gelatinization temperatures for some starches**

| Starch type | Gelatinization temperature range (°C)* |
|---|---|
| Wheat | 58-61-64 |
| Rice | 68-74-78 |
| Maize (Corn) | 62-67-72 |
| Potato | 58-63-68 |
| Tapioca | 59-64-69 |
| Waxy maize | 63-68-72 |
| Sorghum | 68-74-78 |

| | |
|---|---|
| * Determined by Kofler hot stage microscopy (onset- midpoint-end) (Table 8.1 "Starch: Chemistry and Technology", edited by James BeMiller and Roy Whistler, Food Science and Technology International Series, Third edition 2009). | |

Accordingly, depending on the starch type (or types) in the starting material, the temperature is adjusted to the appropriate temperature which will result in gelatinization of the starch. In one embodiment, depending on the starch type (or types) in the starting material, the temperature is adjusted to the appropriate temperature which will result in gelatinization in at least a portion of the starch.

The gelatinizing temperatures of different starches are well known in the art, and the selection of the appropriate gelatinizing temperature is within the skill of a person knowledgeable in the field. For example, gelatinization temperature may be determined by Kofler hot stage microscopy (see also Table 1).

In some embodiments, the extent of gelatinization of the starch is such that at least half of the starch is gelatinized, such as at least 70% w/w, 80% w/w, 90 % w/w, or may be essentially complete, that is, essentially all the starch in the mixture is gelatinized.

In some embodiments, the temperature in step d) is adjusted to a temperature above starch gelatinization , for example above 70 degrees C, for example in the range from 70 to 95 degrees C, such as from 70-90 degrees C, or 70 -85 degrees, or for example from 75 to 95 degrees, such as from 80 to 95 or 85 to 95 degrees. This temperature range will encompasse the temperature optimum of the at least one amylolytic enzyme added.

In some embodiments, the temperature in step d) is adjusted to a temperature above starch gelatinization and endogenous amylolytic enzyme inactivation, for example above 70 degrees C, for example in the range from 70 to 95 degrees C, such as from 70-90 degrees C, or 70 -85 degrees, or for example from 75 to 95 degrees, such as from 80 to 95 or 85 to 95 degrees. This temperature range will ensure the inactivation of most endogenous amylolytic enzymes (e.g. endogenous amylases), while encompassing the temperature optimum of the at least one further amylolytic enzyme. In one embodiment, this temperature range will ensure the inactivation of wheat endogenous amylolytic enzymes (e.g. endogenous amylases), while encompassing the temperature optimum of the at least one further amylolytic enzyme.

In some embodiments, the temperature in step d) is adjusted to a temperature equal or higher than 55 deg C, for example ranging from 55 to 95 deg C, for example ranging from 60 to 95 deg C, for example ranging from 60 to 90 degrees C, such as from 60-to 85 degrees C, or 65 to 85 degrees, or for example ranging from 70 to 95 degrees C, such as from 70-to 90 degrees C, or 70 to 85 degrees, or for example from 75 to 95 degrees, such as from 80 to 95 or 85 to 95 degrees.

In some embodiments of the method according to the invention, a mixture of different starches may be present in the mixture of step c). In such cases, the temperature selected in d) may be the highest gelatinization temperature of the starches present.

In particular embodiments, the step d) (adjusting the temperature of the mixture from step c) to a temperature which leads to gelatinization of the starch in said mixture) is performed by direct steam injection.

### High shear mixing

The method of the invention comprises a step of subjecting the mixture of step c) to high shear mixing, by use of a Ring Layer mixer.

The high shear mixing may be for a time period of 0.5 seconds to 10 minutes, such as 1 second to 10 minutes, such as from 1 second to 5 minutes, such as 1 second to 3 minutes, such as 1 second to 120 seconds, such as 1 second to 90 seconds, such as 1 second to 60 seconds.

The high shear mixing may be such that the mixture is homogenized within a time period of 1 second to 10 minutes, such as from 1 second to 5 minutes, such as 1 second to 3 minutes, such as 1 second to 120 seconds, such as 1 second to 90 seconds, such as 1 second to 60 seconds.

In particular embodiments, the high shear mixing is such that the mixture is homogenized within a time period of 1 second to 50 seconds, such as 1 second to 40 seconds, 1 second to 30 seconds.

In this context, homogenized means where the starch granules are swollen and dispersed into the media.

Said high shear mixing is performed simultaneously with the adjusting of the temperature to a gelatinizing temperature (step c), discussed above).

Shear forces are unaligned forces pushing one part of the body in one direction, and another part of the body in the opposite direction.

High shear mixers disperse an ingredient or ingredient mix into a main continuous phase, for example a solid, semi-liquid or liquid phase. Typically, a mobile rotor or impeller is used together with a stationary component known as a stator together to create high shear. Thus, a high shear mixer may be defined as a mixer comprising a rotor and at least one stator. Examples of high shear mixers are well known in the art, and include for example ring layer mixer, homogenizer, paddle mixer, pin mixer, pelletizer, granulator and high shear pump.

The term high shear mixing as used herein may be defined as the mixing which achieves such shear as is achieved by using a Ring Layer Mixer, for example under the conditions described in Example 2.

Where the temperature adjustment is achieved using direct steam injection, the heat adjustment together with high shear mixing leads to gelatinization occurring within a very short period of time (milliseconds to seconds, such as from 0.5 seconds to 60 seconds), essentially instantaneously.

### Ring Layer Mixer

The high shear mixing step e) is achieved by use of a ring layer mixer.

A ring layer mixer delivers high peripheral speeds. The resulting centrifugal force brings the product outwards into a ring layer on the vessel side wall. The high speed difference between the rotating agitator and the mixing drum, combined with the use of different mixing elements ensures a high shear mixing.

Direct steam injection is simple to implement when using a ring layer mixer, which is a further advantage of using a ring layer mixer.

Some embodiments relate to the method according to the invention, wherein steps c) to e) are performed in a Ring Layer Mixer. Other embodiments relate to method according to the invention where steps c) up to and including at least a part of step f) are performed in a Ring Layer Mixer

Particular embodiments relate to methods of the invention wherein the steps a) to e) are performed in a Ring Layer Mixer. As mentioned below, other embodiments relate to methods of the invention wherein steps a to c) are performed prior to use of the ring layer mixer (i.e., pre-mixing step) and steps d) to e) are performed in the ring layer mixer.

Other particular embodiments relate to the method of the invention where direct steam injection is used to adjust the temperature in step d) and ring layer mixer is used for high shear mixing of step e).

It is believed that the generation of high shear forces during starch gelatinization in the presence of fats is essential to deliver the semolina texture in the food product prepared by the method of the present invention.

As above reported , it was observed that the high shear mixing conditions are necessary to ensure that semolina texture is obtained in the food product. As demonstrated in Example 3, in the absence of an equipment which can deliver high shear mixing during performance of step e) a ring layer mixer), the semolina texture attribute is not obtained in the food product.

### Incubating

The method according to the invention comprises the step f) of incubating the mixture obtained by high shear mixing from step e) such that the desired degree of hydrolysis is achieved.

This incubation step relates to a step when the mixture from step e) is kept at a certain temperature, for a certain period of time. This incubation allows the enzymes, in particular the at least one (further) amylolytic enzyme of step b) to act. In some embodiments, mixing may take place in the incubation period. The mixing avoids sedimentation, and/or facilitates an even and stable temperature profile. In particular embodiments, the mixing in step f) is not high shear mixing.

The temperature may be selected to provide optimal performance of the at least one (further) amylolytic enzyme, such as amylase, from step b).The selection of the conditions for said incubation (temperature, time, mixing speeds) will depend on the desired degree of hydrolysis of the starch in the mixture, and is within the skill of the person with ordinary skill in the field. The desired degree of hydrolysis is determined for example by desired characteristics of the food product. For example, if higher viscosity is desired, then extensive starch hydrolysis may not be necessary.

Some embodiments relate to the method according to the invention, wherein the incubation of step f) is performed at a temperature in a range selected such that the at least one (further) amylolytic enzyme of step b) has an optimal activity.

The temperature at which the at least one (further) amylolytic enzyme of step b) has optimal activity may be determined by routine investigation, but this information is also typically provided by the supplier of the enzyme. See also under the heading "amylolytic enzymes addition in step b)" for further discussion of selection of temperature.

In some embodiments, the incubation of step f) is performed at a temperature in the range of from 70 to 95 degrees C, such as from 70 to 90 degrees C, for example from 70 to 85 degrees C, or for example from 75 to 95 degrees C, such as from 75 to 80 degrees C; for a period of time in the range from 1 minute to 24 hours, such as 1 minute to 12 hours, such as from 1 minute to 10 hours, such as from 1 minute to 8 hours, such as 1 minute to 7 hours, such as 1 minute to 6 hours, such as 1 minute to 5 hours, such as 1 minute to 4.5 hrs, such as 1 minute to 4 hours, such as 1 minute to 3.5 hours, such as 1 minute to 3 hours, such as 1 minute to 2.5 hours, such as 1 minute to 120 minutes, such as from 2 minutes to 80 minutes, such as from 10 minutes to 80 minutes, 10 to 60 minutes; or for example from 1 minute to 10 minutes, 1 to 8 minutes, or 1 to 5 minutes, or for example from 2 minutes to 10 minutes.

### Drying

The process comprises a drying step j), for example roller drying, and milling in order to produce a dried product which may be reconstituted before use.

Drying is defined as the application of heat under controlled conditions, to remove the water present in liquid or semi-liquid foods and to yield solid products.

In one embodiment such step j) is a roller drying step. The principle of roller drying process (or drum drying) is that a thin film of material is applied to the smooth surface of a continuously rotating, stema heated metal drum. The film of the drying material is continuously scraped off by a stationary knife located oppsite to the point of application of the liquid or semi-liquid material. The dryer consists of a single drum or a pair of drums with or without satellite rollers.

Roller drying is a conventional drying technique in the art. The person skilled in the art will be able to select appropriate roller drying temrperature and speed for the preparation of food products according to the method of the invention.

In such embodiment, the product obtained may be a finished infant or all family cereal product to be consumed in the format of a porridge after reconstitution as above described.

### Further steps

Yet further embodiments relate to the method according to the invention, further comprising the step g) additional heat treatment of the mixture which was obtained by high shear mixing according to steps a) to f).

The purpose of the heat treatment in step g) is to reduce microbiological load of the product, as well as to inactivate enzymes, including the at least one (further) amylolytic enzyme from step b). Thus, the temperature and period of time of heat treatment of step g) will be selected in order to fulfil these two requirements and may be performed by any suitable means. It is considered to be within the skill of the person with knowledge in the field to select the means as well as appropriate temperature and time. The heat treatment of step g) may be for example performed by bringing the temperature of the homogenized mixture to a temperature in the range from 90 to 170 degrees Celsius, for a period of time from 2 seconds to 5 minutes.

In particular embodiments, the temperature in step g) is brought to a temperature in the range from 100 to 140 degrees C for a period of time of 4 seconds to 60 seconds.

In some particular embodiments, the heat treatment of step g) is performed by direct steam injection.

In one embodiment, the heat treatment of step g) may be performed after step e), such as directly after step e). In such embodiment of the invention, steps c) up to and including at least a part of step f) are performed in a Ring Layer Mixer.

The heat treatment of step g) may be performed before step j), such as directly before step j).

The method of the invention may further comprise one or more further steps wherein one or more yet further ingredients are added to mixture. These ingredients may be any ingredient suitable for the food product being manufactured. In particular, ingredients which are desired to be included in the final food product, but which may be negatively affected by for example the heat and-or the high shear mixing of steps c) and d), may be advantageously added at a point after these said steps. Examples of ingredients which may be negatively affected include heat sensitive nutrients such as heat-sensitive vitamins, and-or probiotics. For example, one or more yet further ingredients may be added after step e), for example after step e) and before step f), or for example immediately after step e), or for example immediately after step e) and before step f). In some embodiments the yet further one or more ingredients may be added after step f), such as immediately after step f) and before any further steps. The person skilled in the art will recognize the requirements of conventional ingredients, including heat-sensitive nutrients and can determine at which point these may be added.

In some embodiments, the method of the invention further comprises a step h) of cooling the mixture obtained by previous step. The cooling may be effected by any suitable means, and may be for example to a temperature in the range from -20 degrees C to 18 degrees C, such as for example 0 to 10 degrees C, such as 0 to 5 degrees C.

### The product obtainable by the method

The invention relates in a second aspect to a food product obtainable by a method according to the invention. In one embodiment of this aspect, the invention relates to a product obtained by a method according to the invention.

The food product according to the invention may be described as comprising hydrolysed starch and having a semolina texture within the meaning of the present invention wherein the semolina attribute as scored according to the method described is equal or higher than 1, in particular equal or higher than 2.

A finished food product means a food product as sold to the consumer. Non limiting examples of final food products include cereals, cereal milk drinks, and the like.

It should be noted that embodiments and features described in the context of one of the aspects of the present invention also apply to the other aspects of the invention.

The invention will now be described in further details in the following non-limiting examples.

### Examples

### Example 1: Conventional in-line hydrolysis set up

In this example of a conventional in-line hydrolysis process (where the hydrolysis is performed in the line of production of a finished food product), a wheat flour, water, fat and optionally other ingredients (e.g. sucrose, etc.) are mixed in a preparation tank. The slurry is then pumped into tubes. The amylase solution is injected in-line just before the static mixer where steam is injected to reach the optimum temperature for the enzyme activity (for example above 70 degrees C, such as from 70 to 95 degrees C, for example 70 to 90 degrees C, such as from 70 to 85 degrees C, for example from 75-85 degrees C). The amylase can also be added in the initial liquid batch preparation tank. The slurry is then further processed at this optimum temperature for a residence time (corresponding to the incubation of step f), depending on the extent of hydrolysis required (e.g. 2 to 10 minutes), before final heat treatment for hygienic reasons and enzymes inactivation (step g), for example: above 120°C for 20 sec). The slurry (comprising around 45% w/w solids) is then subject to a roller drying treatment (corresponsing to step j)) according to the process of the invention) to provide the finished food product. Roller drying treatment is performed in a mono-cylinder roller dryer at a temperature comprised between 185 and 190 deg C and at speed comprised between 4 and 5 rpm. The finished food product may be then milled and packed for commercial use.

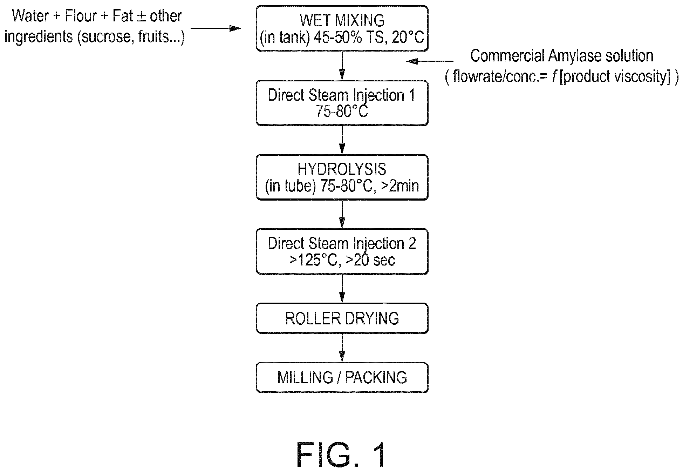

Figure 1 is a simplified process diagram for the in-line hydrolysis setup.

### Example 2: Method of the invention for in-line hydrolysis

The method of the invention may be incorporated as an in-line method of hydrolysis in method for producing a finished food product.

In one example of the method according to the invention, the conventional steps of "enzyme dosing - steam injection - static mixer" as above described in Example 1 are replaced by a Ring Layer Mixer (RLM).

A RLM with 10 litre capacity was used, with speed set to 2000 rpm. The RLM had two inlets, wherein the first inlet was used to introduce ingredients' mixture and enzyme solution. Steam was injected via the second inlet. The steam was superheated, and used to bring the temperature of the flour and enzyme mix in the tank to a temperature of 75 to 80 degrees Celsius, as measured by a probe. The ingredient mixture was thus almost instantaneously both heated and homogenized. The resulting treated mixture was transported out of the ring layer mixer to holding tubes. The treated mixture was incubated at 75 degrees C for a time longer than 2 minutes to allow the further hydrolysis by the enzymes.

The key characteristic of this high shear mixer is that it allows instantaneous and simultaneous flour gelatinization and mixing under high shear with steam and the other added ingredients, especially the fats.

The slurry is then subject to a roller drying treatment as above described in Example 1. The finished product can then be milled and packed for commercial use.

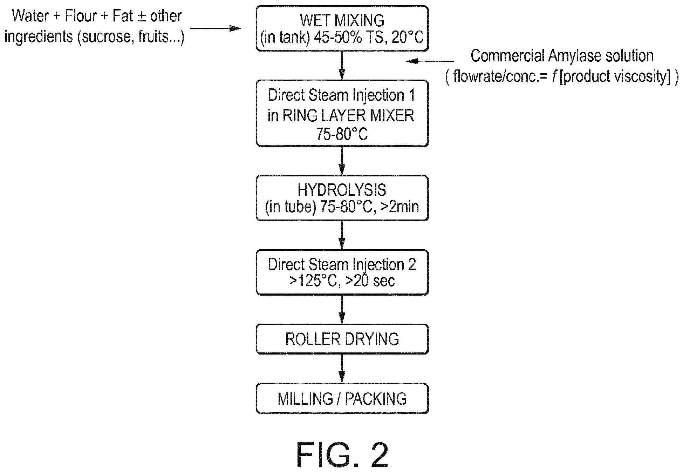

See a simplified process diagram in Figure 2.

### Example 3: Comparison of Sensory and texture attributes of a porridge based on a cereal product prepared with or without the method of the invention

Sensory and Texture attributes were evaluated for porridge obtained by reconstitution of cereal products of the same recipe (see Table 1 below) but prepared under two different manufacturing set ups (with or without ring layer mixer as described above in Example 2) or 1) respectively)

**Table 1 - Recipes tested in Example 3**

| Ingredient | Amount (% w/w) |
|---|---|
| Wheat Flour | 44% |
| Milk Skimmed Powder | 33% |
| Fats | 8% |
| Sugar | 2% |
| Alpha-amylase | < 1% |
| Fruit juice concentrate | 13% |
| Minor ingredients | < 1% |

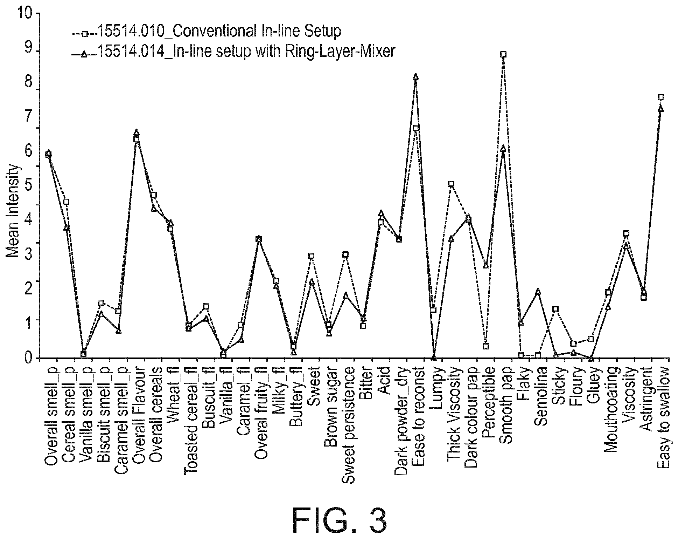

Roller-dried prototypes, reconstituted into a cereal porridge, were assessed by an external trained sensory panel of 12 assessors. Monadic profiles were conducted on product appearance, flavour/aroma and texture without repetition. Results are reported in Table 2 (as well as graphically represented in Figure 3) and show that the process of the present invention (wherein RLM is implemented) has on the overall product sensory attributes, except for the observed difference in the semolina texture in which respect the product prepared according to the process of the invention (Example 2) scored a level of 2 (semolina sensory attribute measured: quantity of round particles perceived in the mouth) while the reference (prepared according to process described in Example 1) scored 0 (semolina sensory attribute measured: quantity of round particles perceived in the mouth). In such experiment, a score of >0.5 is typically significant.

**Table 2**

| | | |
|---|---|---|
| Impact on sensory profile for samples of example 3 (0= no sensory intensity; 10= high sensory intensity). | | |

| **Evaluated Parameter** | **15514.010 Conventional In-line Setup** | **15514.014 In-line setup with Ring-Layer-Mixer** |
|---|---|---|
| **Overall smell_p** | 5.90 | 5.96 |
| **Cereal smell_p** | 4.53 | 3.78 |
| **Vanilla smell_p** | 0.14 | 0.14 |
| **Biscuit smell_p** | 1.59 | 1.28 |
| **Caramel smell_p** | 1.37 | 0.82 |
| **Overall Flavour** | 6.33 | 6.55 |
| **Overall cereals** | 4.71 | 4.34 |
| **Wheat _fl** | 3.74 | 3.91 |
| **Toasted cereal_fl** | 0.95 | 0.86 |
| **Biscuit_fl** | 1.51 | 1.16 |
| **Vanilla_fl** | 0.09 | 0.23 |
| **Caramel_fl** | 0.96 | 0.54 |
| **Overall fruity_fl** | 3.44 | 3.45 |
| **Milky_fl** | 2.24 | 2.09 |
| **Buttery_fl** | 0.35 | 0.18 |
| **Sweet** | 2.95 | 2.23 |
| **Brown sugar** | 0.96 | 0.73 |
| **Sweet persistence** | 2.99 | 1.82 |
| **Bitter** | 0.95 | 1.17 |
| **Acid** | 3.93 | 4.21 |
| **Dark powder_dry** | 3.44 | 3.42 |
| **Ease to reconst** | 6.65 | 8.15 |
| **Lumpy** | 1.40 | 0.04 |
| **Thick Viscosity** | 5.05 | 3.46 |
| **Dark colour pap** | 4.00 | 4.10 |
| **Perceptible** | 0.35 | 2.69 |
| **Smooth pap** | 8.79 | 6.08 |
| **Flaky** | 0.09 | 1.05 |
| **Semolina** | 0.09 | 1.95 |
| **Sticky** | 1.43 | 0.09 |
| **Floury** | 0.41 | 0.18 |
| **Gluey** | 0.55 | 0.00 |
| **Mouthcoating** | 1.90 | 1.49 |
| **Viscosity** | 3.60 | 3.26 |
| **Astringent** | 1.75 | 1.95 |
| **Easy to swallow** | 7.54 | 7.23 |

### Comparative Example 4:

### Comparison of Sensory and texture attributes of a porridge based on a cereal product not comprising fats and prepared with the method of the invention

Texture attributes were evaluated for porridge obtained by reconstitution of cereal products of the same recipe (see Table 3 below) but prepared under two different manufacturing set ups (with or without ring layer mixer as described above in Example 2) or 1) respectively).

**Table 3 - Recipes tested in Example 4**

| Ingredient | Amount (% w/w) |
|---|---|
| Wheat Flour | 86% |
| Sugar | 13% |
| Alpha-amylase | <1% |
| Minor ingredients | <1% |

Roller-dried prototypes, reconstituted into a cereal porridge, were assessed by an external trained sensory panel of 12 assessors. Monadic profiles were conducted on product appearance, flavour/aroma and texture without repetition. Under the conditions tested in Example 4, no Semolina texture was observed for any of the sample tested demonstrating the unexpected and critical role played by the presence of fats in the composition when the process of the invention is used.

### Example 5:

### Experiment correlating Reconstitution speed to Semolina Attribute perception

The analysis were performed on a Rapid Visco Analyser equipment (RVA, Newport Scientific):
- finished roller-dried products prepared with recipes similar to that described in Example 3 and procedures analogous to that described respectively in Example 2 (products from the method of the invention) and Example 1 (reference) were reconstituted in water at 50 °C in a 25 mL canister (50 g of product in 150 mL of water).
- The viscosity of the powder under reconstitution was measured at 50 RPM (RPM: rotation per minute) for 10 min.

From each of the RVA curves, maximal viscosity (ViscoMax, mPa.s) and time to reach this maximal viscosity (Tvmax, min) were extracted. The maximal viscosity represents the viscosity of the pap once fully reconstituted. Tvmax represents the time needed for the powder to be fully reconstituted.

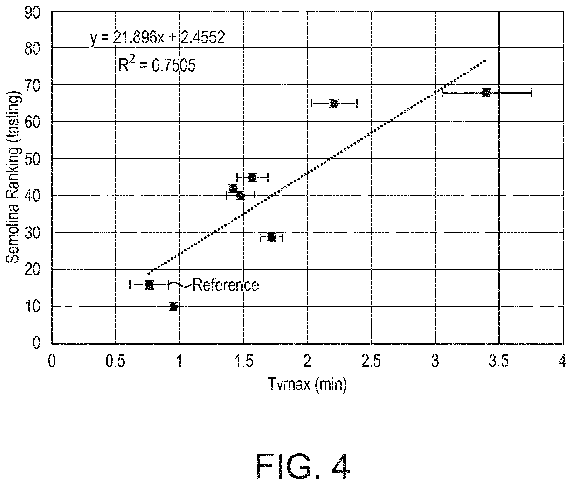

The graph in Fig. 4 reports relative ranking of eight products which were assessed after reconstitution as above described for their semolina sensory attribute by an internal panel. As it can be observed from the results, 6 out of 7 products prepared according to the method of the invention (as described in Example 2) were perceived as having an increased semolina texture when compared to a product obtained with the standard process (as described in example 1 - "Reference" in the graph).

From the results it can also be observed that at higher values for Tvmax (which is believed to be correlated with the kinetic of reconstitution), the semolina texture becomes more prominent. Accordingly, without wishing to be bound by theory, it is believed that a slower/more difficult imbibition of the particles with liquid may be associated to the presence of the coarse particles providing semolina texture in the product.

## Claims

1. A method for producing a food product comprising hydrolysed starch, said method comprising the steps of :
a) Providing a starting material which comprises starch,
b) Providing as ingredients: water, fat, at least one amylolytic enzyme and optionally one or more other ingredients, wherein fat is added in an amount comprised between 1 and 40% w/w, for example between 2 and 25% w/w, for example between 5 and 20% w/w, for example between 5 and 18% w/w of the solids composition,
c) Mixing the starting material of step a) and the ingredients of step b)
d) adjusting the temperature of the mixture of step c) to a temperature which leads to gelatinization of the starch in said mixture, and
e) simultaneously to step d), subjecting said mixture of step c) to high shear mixing, wherein said high shear mixing is achieved by use of a Ring Layer Mixer,
f) Incubating the mixture of step e) such that the desired degree of hydrolysis is achieved,
g) Optionally heat-treating the mixture obtained by previous steps;
h) Optionally cooling the mixture obtained by previous steps;
i) Drying the mixture which was obtained by previous steps;
thereby obtaining a food product comprising hydrolysed starch.

2. The method according to claim 1, wherein the at least one amylolytic enzyme which is provided in step b) is active at or above the temperature to which the mixture is adjusted in step d).

3. The method according to claim 1 or 2, wherein in step d) the mixture of step c) is adjusted at a temperature which is higher than 55 deg C, for example ranging from 55 deg C to 95 deg C.

4. The method according to claim 1, 2 or 3, wherein mixing of the starting material of step a) and of the remaining ingredients of step b) is performed prior to the provision of the amylolytic enzyme of step b).

5. The method according to any of the preceding claims, wherein step d) is performed by direct steam injection.

6. The method according to any of claims 1 to 5, wherein said high shear mixing in step e) is such that the mixture is homogenized within a time period of 1 second to 50 seconds.

7. The method according to any of the preceding claims, wherein said starting material is a plant preparation.

8. The method according to claim 7, wherein the starting material is selected from a flour of one or more grains, such as a flour selected from wheat flour, rice flour, maize flour, barley flour, rye flour, oat flour, buckwheat flour, millet flour, quinoa flour, sorghum flour; a flour made from one or more tubers, such as potato, cassava; a flour made from legumes such as pea flour; or combinations thereof.

9. The method according to any of the preceding claims, wherein said mixture of step c) has a total solids content in the range of 20 to 70 % w/w.

10. The method according to any of the preceding claims, wherein the temperature in step d) is adjusted to a temperature above starch gelatinization, for example above 70 degrees C.

11. The method according to any of the preceding claims, wherein the incubation of step f) is performed at a temperature in the range of from 70 to 95 degrees C, for a period of time in the range from 1 minute to 12 hours.

12. Use of the method according to any of claims 1 to 11 for manufacturing a food product **characterized by** having a semolina texture,
wherein semolina texture is a sensory attribute once reconstituted, which is defined by quantity, size and/or hardness of round particles perceived in mouth and
wherein the semolina attribute is equal or higher than 1.

13. A food product having a semolina texture obtainable by the method according to any of the preceding claims 1 to 11, wherein semolina texture is a sensory attribute once reconstituted, which is defined by quantity, size and/or hardness of round particles perceived in mouth and
wherein the semolina attribute is equal or higher than 1.

## Patentansprüche

1. Verfahren zum Herstellen eines Nahrungsmittelprodukts umfassend hydrolysierte Stärke, wobei das Verfahren die folgenden Schritte umfasst:
a) Bereitstellen eines Ausgangsmaterials, das Stärke umfasst,
b) Bereitstellen als Inhaltsstoffe: Wasser, Fett, mindestens ein amylolytisches Enzym und wahlweise einen oder mehrere andere Inhaltsstoffe, wobei Fett in einer Menge zwischen 1 und 40 Gew.-%, zum Beispiel zwischen 2 und 25 Gew.-%, zum Beispiel zwischen 5 und 20 Gew.-%, zum Beispiel zwischen 5 und 18 Gew.-% der Feststoffzusammensetzung zugegeben wird,
c) Mischen des Ausgangsmaterials von Schritt a) mit den Inhaltsstoffen von Schritt b)
d) Einstellen der Temperatur der Mischung aus Schritt c) auf eine Temperatur, die zur Gelatinierung der Stärke in der Mischung führt, und
e) gleichzeitig mit Schritt d), Behandeln der Mischung aus Schritt c) durch Hochscherungsmischen, wobei das Hochscherungsmischen durch Verwendung eines Ringschichtmischers erreicht wird,
f) Inkubieren der Mischung aus Schritt e), so dass der gewünschte Hydrolysegrad erreicht wird,
g) wahlweise Wärmebehandeln der durch vorherige Schritte erhaltenen Mischung;
h) wahlweise Kühlen der Mischung, die durch vorherige Schritte erhalten wurde;
i) Trocknen der Mischung, die durch vorherige Schritte erhalten wurde;
wodurch ein Nahrungsmittelprodukt erhalten wird, das hydrolysierte Stärke umfasst.

2. Verfahren nach Anspruch 1, wobei das mindestens eine amylolytische Enzym, das in Schritt b) bereitgestellt wird, bei oder oberhalb der Temperatur, auf die Mischung in Schritt d) eingestellt wird, aktiv ist.

3. Verfahren nach Anspruch 1 oder 2, wobei in Schritt d) die Mischung aus Schritt c) auf eine Temperatur eingestellt wird, die höher als 55 °C ist, beispielsweise im Bereich von 55 °C bis 95 °C.

4. Verfahren nach Anspruch 1, 2 oder 3, wobei das Mischen des Ausgangsmaterials aus Schritt a) und der restlichen Inhaltsstoffe aus Schritt b) vor der Bereitstellung des amylolytischen Enzyms aus Schritt b) durchgeführt wird.

5. Verfahren nach einem der vorstehenden Ansprüche, wobei Schritt d) durch direkte Dampfinjektion durchgeführt wird.

6. Verfahren nach einem der Ansprüche 1 bis 5, wobei das Hochscherungsmischen in Schritt e) derart ist, dass die Mischung innerhalb eines Zeitraums von 1 Sekunde bis 50 Sekunden homogenisiert wird.

7. Verfahren nach einem der vorstehenden Ansprüche, wobei das Ausgangsmaterial ein Pflanzenpräparat ist.

8. Verfahren nach Anspruch 7, wobei das Ausgangsmaterial ausgewählt ist aus einem Mehl von einem oder mehreren Körnern, wie einem Mehl, das ausgewählt ist aus Weizenmehl, Reismehl, Maismehl, Gerstenmehl, Roggenmehl, Hafermehl, Buchweizenmehl, Hirsemehl, Quinoamehl, Sorghummehl; einem Mehl, das aus einer oder mehreren Knollen, wie Kartoffel, Maniok, hergestellt ist; ein Mehl, das aus Hülsenfrüchten wie Erbsenmehl hergestellt ist; oder Kombinationen davon.

9. Verfahren nach einem der vorstehenden Ansprüche, wobei die Mischung aus Schritt c) einen Gesamtfeststoffgehalt im Bereich von 20 bis 70 Gew.-% aufweist.

10. Verfahren nach einem der vorstehenden Ansprüche, wobei die Temperatur in Schritt d) auf eine Temperatur oberhalb der Stärkegelatinierung, zum Beispiel oberhalb 70 °C, eingestellt wird.

11. Verfahren nach einem der vorstehenden Ansprüche, wobei die Inkubation von Schritt f) bei einer Temperatur im Bereich von 70 bis 95 °C für einen Zeitraum im Bereich von 1 Minute bis 12 Stunden durchgeführt wird.

12. Anwenden des Verfahrens nach einem der Ansprüche 1 bis 11 zum Herstellen eines Nahrungsmittelprodukts, **dadurch gekennzeichnet, dass** es eine Grießkonsistenz aufweist, wobei die Grießkonsistenz ein sensorisches Attribut nach Rekonstitution ist, das durch die Menge, Größe und/oder Härte von im Mund wahrgenommenen runden Teilchen definiert ist, und wobei das Grießattribut gleich oder größer als 1 ist.

13. Nahrungsmittelprodukt mit einer Grießkonsistenz, die durch das Verfahren nach einem der vorstehenden Ansprüche 1 bis 11 erhalten werden kann, wobei die Grießkonsistenz ein sensorisches Attribut nach Rekonstitution ist, das durch Menge, Größe und/oder Härte von im Mund wahrgenommenen runden Teilchen definiert ist, und wobei das Grießattribut gleich oder größer als 1 ist.

## Revendications

1. Procédé de production d'un produit alimentaire comprenant de l'amidon hydrolysé, ledit procédé comprenant les étapes consistant à :
a) fournir un matériau de départ qui comprend de l'amidon,
b) fournir en tant qu'ingrédients : de l'eau, de la matière grasse, au moins une enzyme amylolytique et facultativement un ou plusieurs autres ingrédients, dans lequel de la matière grasse est ajoutée en une quantité comprise entre 1 et 40 % en poids, par exemple entre 2 et 25 % en poids, par exemple entre 5 et 20 % en poids, par exemple entre 5 et 18 % en poids de la composition de solides,
c) mélanger le matériau de départ de l'étape a) et les ingrédients de l'étape b)
d) ajuster la température du mélange de l'étape c) à une température qui entraîne une gélatinisation de l'amidon dans ledit mélange, et
e) simultanément à l'étape d), soumettre ledit mélange de l'étape c) à un mélange par cisaillement élevé, dans lequel ledit mélange par cisaillement élevé est obtenu par l'utilisation d'un mélangeur à couche annulaire,
f) incuber le mélange de l'étape e) de telle sorte que le degré souhaité d'hydrolyse est obtenu,
g) facultativement traiter thermiquement le mélange obtenu par les étapes précédentes ;
h) facultativement refroidir le mélange obtenu par les étapes précédentes ;
i) sécher le mélange qui a été obtenu par les étapes précédentes ;
ce qui permet d'obtenir un produit alimentaire comprenant de l'amidon hydrolysé.

2. Procédé selon la revendication 1, dans lequel l'au moins une enzyme amylolytique qui est fournie à l'étape b) est active à une température égale ou supérieure à la température à laquelle le mélange est ajusté à l'étape d).

3. Procédé selon la revendication 1 ou 2, dans lequel à l'étape d) le mélange de l'étape c) est ajusté à une température qui est supérieure à 55 deg C, par exemple allant de 55 deg C à 95 deg C.

4. Procédé selon la revendication 1, 2 ou 3, dans lequel le mélange du matériau de départ de l'étape a) et des ingrédients restants de l'étape b) est mis en œuvre avant la fourniture de l'enzyme amylolytique de l'étape b).

5. Procédé selon l'une quelconque des revendications précédentes, dans lequel l'étape d) est mise en œuvre par injection directe de vapeur.

6. Procédé selon l'une quelconque des revendications 1 à 5, dans lequel ledit mélange par cisaillement élevé à l'étape e) est tel que le mélange est homogénéisé dans les limites d'une période de temps de 1 seconde à 50 secondes.

7. Procédé selon l'une quelconque des revendications précédentes, dans lequel ledit matériau de départ est une préparation végétale.

8. Procédé selon la revendication 7, dans lequel le matériau de départ est choisi parmi une farine d'une ou plusieurs céréales, telle qu'une farine choisie parmi de la farine de blé, de la farine de riz, de la farine de maïs, de la farine d'orge, de la farine de seigle, de la farine d'avoine, de la farine de sarrasin, de la farine de millet, de la farine de quinoa, de la farine de sorgho ; une farine fabriquée à partir d'un ou plusieurs tubercules, tels que la pomme de terre, le manioc ; une farine fabriquée à partir de légumineuses telle que de la farine de pois ; ou des combinaisons de celles-ci.

9. Procédé selon l'une quelconque des revendications précédentes, dans lequel ledit mélange de l'étape c) a une teneur totale en solides dans la plage de 20 à 70 % en poids.

10. Procédé selon l'une quelconque des revendications précédentes, dans lequel la température à l'étape d) est ajustée à une température supérieure à la gélatinisation d'amidon, par exemple supérieure à 70 degrés C.

11. Procédé selon l'une quelconque des revendications précédentes, dans lequel l'incubation de l'étape f) est mise en œuvre à une température dans la plage allant de 70 à 95 degrés C, pendant une période de temps dans la plage allant de 1 minute à 12 heures.

12. Utilisation du procédé selon l'une quelconque des revendications 1 à 11 pour la fabrication d'un produit alimentaire **caractérisé en ce qu'**il a une texture de semoule, dans laquelle une texture de semoule est un attribut sensoriel une fois reconstitué, qui est défini par la quantité, la taille et/ou la dureté de particules rondes perçues dans la bouche et dans laquelle l'attribut de semoule est égal ou supérieur à 1.

13. Produit alimentaire ayant une texture de semoule pouvant être obtenu par le procédé selon l'une quelconque des revendications 1 à 11 précédentes, dans lequel une texture de semoule est un attribut sensoriel une fois reconstitué, qui est défini par la quantité, la taille et/ou la dureté de particules rondes perçues dans la bouche et dans lequel l'attribut de semoule est égal ou supérieur à 1.
